# EUROPEAN PATENT SPECIFICATION

(11) **EP 3 044 125 B1**
(45) Date of publication and mention of the grant of the patent: **12.04.2017**
(21) Application number: 14758562.4
(22) Date of filing: 03.09.2014
(51) Int. Cl.: B65D 85/804, A47J 31/40

(54) **CAPSULE, METHOD AND SYSTEM FOR PREPARING A VISCOUS BEVERAGE OR FOOD PRODUCT**
KAPSEL, VERFAHREN UND SYSTEM ZUR HERSTELLUNG EINES VISKOSEN GETRÄNKS ODER NAHRUNGSMITTELS
CAPSULE, PROCÉDÉ ET SYSTÈME DE PRÉPARATION D'UN PRODUIT ALIMENTAIRE OU DE BOISSON VISQUEUSE

(30) Priority: 09.09.2013 EP 13183463
(43) Date of publication of application: 20.07.2016
(73) Proprietor: Nestec S.A., 1800 Vevey (CH)
(72) Inventor: IOTTI, Marco, CH-1007 Lausanne (CH)
(74) Representative: Navarro Fernández, Maria Isabel
(86) International application number: PCT/EP2014/068666
(87) International publication number: WO 2015/032787

(56) References cited:
- EP-A1- 2 374 733
- WO-A1-2012/134313
- WO-A1-2014/102702
- WO-A2-2012/125032

## Description

### Field of the invention

The present invention relates to a capsule for insertion into a food or beverage production machine, and a method and a system for producing a beverage or food product, particularly a beverage or food product having high viscosity. The system consists of the capsule of the present invention and a food or beverage production machine.

### Background of the invention

The capsule of the present invention relates specifically to single-use capsules, and preferably to single-dose capsules, for producing a beverage or food product with a high viscosity. Food products that have a high viscosity in the sense of the present invention are, for example, soups, purees, mashes, slurries or the like. The capsule of the present invention can also be a cartridge, cassette, film sachet or any other rigid, semi-rigid or non-rigid pod or container usable in a food or beverage production machine.

The problem with a high-viscosity beverage or food product is that dispensing it from a known capsule is difficult. In particular, when the viscous beverage or food product is produced by mixing beverage or food product ingredients with a liquid introduced into the capsule, the force of the introduced liquid is typically not high enough to properly empty the capsule of the produced beverage or food product. Furthermore, the outlet of known capsules is often not large enough or is not opened well enough, so that the viscous beverage or food product cannot properly exit the capsule. Another concern with known capsules is that, particularly for a beverage or food product with a high viscosity, a necessary proper mixing of the beverage or food product ingredients with the introduced liquid is not achieved easily.

WO 2010/149509 A1 describes the production of a frozen confection in a container. The container comprises at least one movable scraper. The scraper is specifically movable for scraping off the produced frozen confection from the side walls of the container, and thus improves the dispensing and emptying of the container.

The prior art is also disclosed in WO 2012/134313 A1, WO 2012/125032 A2, EP 2 374 733 A1, and WO 2014/102702 A1. In view of the above, an object of the present invention is to improve the prior art. In particular, an object of the present invention is to provide a single-use capsule for producing a high-viscosity beverage or food product, which can be properly dispensed from the capsule. Further, it is an object of the present invention to improve the mixing of beverage or food product ingredients contained in the single-use capsule with an introduced liquid. Finally, it is an object of the present invention to provide an easy and efficient opening mechanism of the single-use capsule, through which the produced high-viscosity beverage or food product can exit.

### Summary of the invention

The above-mentioned objects are achieved by a capsule, a system and a method of the present invention according to the subject-matter of the attached independent claims. Further advantages of the present invention are developed according to the subject-matter of the dependent claims.

In particular, the present invention relates to a capsule for insertion into a food or beverage production machine, comprising a capsule body for containing ingredients to produce a beverage or food product when combined with a liquid introduced into an inlet of the capsule, an outlet for dispensing the beverage or food product from the capsule, a mixing unit arranged inside said body for mixing the ingredients and the liquid, wherein the mixing unit is selectively movable in respect to the body between a first position, in which the outlet is closed by the mixing unit, and a second position, in which the outlet is open.

The capsule is preferably a single-use capsule and more preferably a single-use and single-dose capsule. The capsule thus contains an integrated single-use mixer.

The mixing unit inside the capsule ensures that the ingredients for producing the beverage of food product and the liquid introduced into the capsule are properly mixed. At the same time the mixing unit provides an easy and efficient opening mechanism of the capsule outlet. The capsule is well suited for producing a high-viscosity beverage or food product, because said beverage or food product can exit the capsule properly through the outlet. The mixing unit can be operated, for example, by the food or beverage production machine, into which the capsule can be inserted. When the food or beverage production machine moves the mixing unit, the capsule outlet is automatically opened and the beverage or food product may be automatically and properly mixed and dispensed.

The mixing unit is rotatable around its longitudinal axis for performing a mixing operation.

The mixing operation ensures that the beverage or food product ingredients inside the capsule body properly mix with the introduced liquid, in order to form the beverage or food product.

Advantageously, the mixing unit is movable between the first position and the second position by being rotated around its longitudinal axis.

For example, the mixing unit inside the capsule can be rotated by the food or beverage production machine, into which the capsule is inserted. As mentioned above, the rotation of the mixing unit ensures on the one hand side the proper mixing of the beverage or food product ingredients with the introduced liquid. On the other hand side the mixing unit is displaced by the same rotation in respect to the body so that the outlet is opened. The displacement of the mixing unit by rotating it can function in a similar manner as for a screw.

Advantageously, the mixing unit is movable between the first position and the second position by being translated along its longitudinal axis.

The mixing unit can be directly translated by the food or beverage production machine, i.e. the translation does not need to be a consequence of the rotation. Thereby, rotation speed and position of the mixing unit can be individually controlled.

The present invention relates further to a capsule for insertion into a food or beverage production machine, comprising a capsule body for containing ingredients to produce a beverage or food product when combined with a liquid introduced into an inlet of the capsule, an outlet for dispensing the beverage or food product from the capsule, a mixing unit arranged inside said body for mixing the ingredients and the liquid, wherein the mixing unit is rotatable in respect to the body and is designed to generate a pressure in direction of the outlet on the beverage or food product in the body by being rotated.

The pressure acting in direction of the outlet pushes the produced beverage or food product through the outlet so that it is quickly dispensed from the capsule. Due to the additional force exerted by the mixing unit, even a high-viscosity beverage or food product can be properly dispensed from the capsule. The capsule of the present invention can be emptied completely from the produced beverage or food product.

Advantageously, the capsule of the present invention is configured with a rotatable mixing unit, which can be rotated by the food or beverage production machine to function as follows. Initially, the rotation moves the mixing unit from the first position, in which it closes the outlet, to the second position, in which the outlet is open. Furthermore, while moving to the second position and when being in the second position, the rotation of the mixing unit generates the pressure on the produced beverage or food product inside the capsule. In other words, the rotation unit of the mixing unit is at the same time used to open the outlet, mix the beverage and food product ingredients with the introduced liquid, and push the produced beverage or food product through the outlet. The pressure generated by the mixing unit is due to its design, and is comparable to the pressure generated in a turbine or a flight auger.

The mixing unit comprises an elongated, preferably cylindrical, central portion, and a plurality of mixing elements extending radially from the central portion.

When the central portion of the mixing unit is rotated by the food or beverage production machine, into which the capsule is inserted, the plurality of mixing elements causes the beverage or food product ingredients inside the capsule body to be properly mixed with the introduced liquid.

Preferably, each mixing element comprises a blade on its distal end.

Preferably, at least some of the blades are sloped in direction of the outlet.

The blades on the distal ends of the mixing elements cause on the one hand side a proper mixing of the beverage or food product ingredients with the introduced liquid. On the other hand sides, the blades exert a force onto the produced beverage or food product, which is directed at least partly towards the outlet. The resulting pressure pushes the produced beverage or food product through the outlet of the capsule. The force generated by the blades is sufficient to properly empty the capsule even from a high-viscosity beverage or food product.

Preferably, the body of the capsule is designed to increase its volume when a pressure is applied onto the mixing unit in the first position in direction of the outlet.

Typically, a high-viscosity beverage or food product, like a soup or a puree, should be provided in a dispensed volume in the range of 100 ml to 300 ml. However, known capsules are typically smaller in volume. Moreover, also for the capsule of the present invention it is desired to keep the volume as small as possible. Therefore, the capsule is preferably designed to increase in volume. In other words the capsule can preferably extend after being inserted into the food or beverage production machine. For example, the food or beverage production machine can therefore push onto the mixing unit in direction of the capsule outlet. The capsule can, for example, be designed like a bellows, which is also able to increase its volume when pushed inside-out.

Preferably, the mixing unit comprises coupling means for mechanically coupling to a food or beverage production machine for being moved and/or rotated by the food or beverage production machine.

The coupling means can, for example, engage with driving means of the food or beverage production machine. For example, when the capsule is inserted into the food or beverage production machine, the driving means can snap onto the coupling means of the mixing unit. At the same time, the body of the capsule is preferably seated in a capsule seat of the food or beverage production machine. The capsule seat prevents that the capsule body is also rotated, when the mixing unit is rotated.

Preferably, the coupling means are designed to deform when decoupled from the food or beverage production machine so that a further coupling to the food or beverage production machine is prevented.

As mentioned before, the capsule of the present invention is preferably a single-use capsule. After its single use, the mechanical coupling of the capsule to the food or beverage production machine by means of the coupling means is not possible anymore. Thereby, an accidental multiple use of the capsule can be prevented. Multiple use of the same capsule could cause contamination of the inside of the food or beverage production machine.

Preferably, the outlet and the inlet are sealed by sealing means, preferably by membranes and/or foils, and the sealing means can be pierced and/or can be peeled off from the capsule.

Preferably, the user has to peel-off the foil or membrane at least from the outlet of the capsule. However, even after peeling off the sealing means, the outlet of the capsule is still closed by the mixing unit, until the mixing unit is moved relatively to the capsule wall. The introduction of liquid by the food or beverage production machine into the capsule is preferably realized by injecting means or by a piercing member of the machine. The injecting means or piercing member is preferably able to puncture or pierce the foil or membrane covering the inlet before injecting the liquid.

The present invention relates further to a system for producing a beverage or food product comprising a capsule as described above and a food or beverage production machine, wherein the food or beverage production machine is configured to rotate and/or move the mixing unit of the capsule in respect to the body of the capsule.

The system of the present invention is well suited to produce a beverage or food product, which can be completely dispensed from the capsule, even if the produced beverage or food product has a high viscosity.

Preferably, the food or beverage production machine comprises driving means for mechanically coupling to coupling means of the mixing unit, and the driving means are rotatable and/or movable in respect to a housing of the food or beverage production machine.

Preferably, the food or beverage production machine is configured to introduce a liquid into the inlet of the capsule, preferably to inject a liquid through sealing means sealing the inlet by a piercing member.

The introduced liquid is preferably water or milk, and can be provided into the inlet of the capsule under pressure. The liquid pressure works together with the pressure provided additionally by rotating the mixing unit, in order to properly dispense the produced beverage or food product from the capsule. The injected liquid can be pre-heated liquid, for example, heated by a heater of the food or beverage production machine. The heater can be an in-line heating assembly, preferably connected to a liquid reservoir and a pump. The pump can preferably pressurize the liquid before introducing it into the capsule.

The present invention is further directed to a method for producing a beverage or food product, comprising the steps of introducing a liquid into a capsule containing precursor ingredients for producing the beverage or food product when combined with the liquid, moving a mixing unit arranged inside the capsule from a first position, in which an outlet of the capsule is closed by the mixing unit, and a second position, in which the outlet is open, rotating the mixing unit in its second position in order to generate a pressure in direction of the outlet on the beverage or food product in the capsule.

Preferably, the step of moving the mixing unit is carried out by rotating the mixing unit in its first position.

By rotating the mixing unit in respect to the capsule body, firstly the outlet is opened, and secondly the liquid is properly mixed with the ingredients inside the capsule, in order to produce the beverage or food product. Thirdly, the dispensing is facilitated by the force exerted by the rotating mixing unit onto the produced beverage or food product, since the force is directed in direction of the capsule outlet.

### Brief description of the drawings

Additional features and advantages of the present invention are described in, and will be apparent from, the description of the presently preferred embodiments which are set out below with reference to the drawings in which:
**Figures 1** to **4** show different views of a capsule of the present invention ;
**Figure 5** shows different views of a capsule and a mixing unit of the present invention ;
**Figure 6** shows a food or beverage production machine of a system of the present invention ;
**Figure 7** shows a system including a food or beverage production machine and a capsule of the present invention ;
**Figure 8** shows an expandable capsule according to the invention.

### Detailed description of the invention

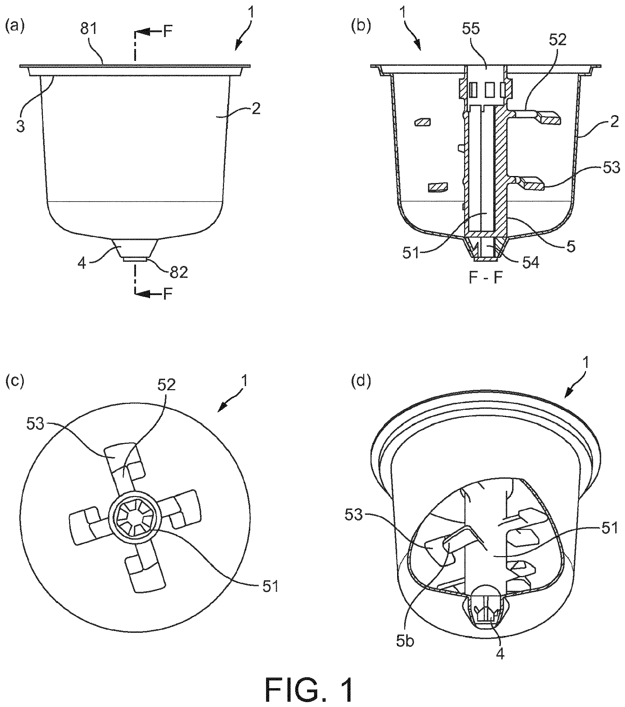

**Figure 1 (a)** shows a side view of the capsule 1 of the present invention. The capsule 1 has a body 2, which is designed for containing beverage or food product ingredients, which are suited to produce a beverage or food product when combined with a liquid. The beverage or food product ingredients can be contained in the capsule 1 in liquid, semi-liquid or dry form. Preferably, the beverage or food product ingredients in the capsule 1 are in a shelf-stable form. The beverage or food product ingredients can, for example, be soup powder, soup concentrate, puree powder, puree concentrate, syrup, slurry, ground coffee, coffee powder, tea leaves or the like. The introduced liquid is preferably water, but can also be milk, a milk-based liquid, soup or the like.

The body 2 of the capsule 1 can have a cylindrical, cone, semi-circular or bell shape. Preferably, the body 2 has cup-shaped side walls, which form a cavity for holding the beverage or food product ingredients, and has a cover, which closes the cavity. The body 2 is preferably water- and/or gas-impermeable. For example, the capsule body 2 can be made of aluminum or plastic. The cover is particularly arranged at an inlet 3 of the body 2. Further, the body has an outlet 4, preferably a spout, which is arranged at the bottom of the cavity and facilitates dispensing of the produced beverage or food product into a cup or a similar container beneath the capsule outlet 4.

For producing the beverage or food product from the capsule 1, a liquid is provided by a food or beverage production machine 10 into the inlet 3 of the capsule 1. The introduced liquid interacts inside the body 2 with the beverage or food product ingredients, and the beverage or food product produced by said interaction is dispensed from the outlet 4. Preferably, both the inlet 3 and the outlet 4 are sealed before use of the capsule 1 by sealing means 81 and 82, respectively. Each sealing means 81, 82 may be a foil, a membrane or the like, and can either be peeled-off from the capsule 1 or can be pierced. The sealing means 81 at the inlet side of the capsule can be integral with the cover, or can even form the cover. In a preferred embodiment the sealing means 82, which seal the outlet 4, can be peeled-off by a user before inserting the capsule 1 into a food or beverage production machine 10, and the sealing means 81, which seal the inlet 3, can be pierced by an injection or piercing member of the food or beverage production machine 10, in order to introduce the liquid into the capsule 1. When the sealing means 82 on the inlet 3 side is intended to be peeled-off, it is preferably designed such that it can be peeled-off only partly. In particular, only a part of the sealing means 82 disposed over a central insertion in the cover can be peeled-off, while the rest of the sealing means 82 remains on the cover for hygienic reasons.

**Figure 1 (b)** shows a cut along the points F-F indicated in **figure 1 (a)**, and shows that the capsule 1 contains a mixing unit 5 arranged inside the body 2. This internal mixing unit 5 is used for properly mixing the liquid injected into the capsule 1 with the beverage or food product ingredients contained in the capsule 1.

The mixing unit 5 is rotatable in respect to the body 2. Therefore, the mixing unit 5 comprises an elongated, preferably cylindrical, central portion 51, which constitutes a rotational axis, and a plurality of mixing elements 52, which extend radially from the outer surface of the central portion 51. When the mixing unit 5 rotates against the capsule body 2, the plurality of mixing elements 52 plow through the liquid- ingredient mixture and ensure a thorough mixing of beverage or food product.

**Figure 1 (b)** shows the capsule 1 in a closed state, i.e. in a state before the beverage or food product is produced and dispensed. In this closed state the mixing unit 5 is in a first position in respect to the body 2, in which the mixing unit 5 closes the outlet 4. For properly closing the outlet 4 the mixing unit 5 is preferably provided with a plug member 54 on its outlet 4 facing end, the plug member 54 being preferably shaped to fit the shape of the outlet 4, which is preferably formed as a spout. The plug member 54 can be made of a material, which allows a hermetic sealing of the outlet 4, or at least closes the outlet 4 in a liquid-tight manner. Additionally, the sealing means 82 can be provided over the opening of the outlet 4, in order to provide hermetic sealing of the inside of the capsule 1. The mixing unit 5 is provided at the inlet 3 facing end with coupling means 55 designed for mechanically coupling to driving means 12 of the food or beverage production machine 10. The coupling means 55 and the driving means 12 can have complementary engaging means. The coupling means 55 are designed in a way that they can be only coupled once to the driving means. For example, the coupling means can deform when decoupled so that a further coupling is impossible. For example, engaging means on the coupling means 55 can bend, break off, or are pushed into the coupling means 55 so that they are not available anymore for coupling to the complementary engaging means of the driving means 12.

**Figures 1 (c)** and **(d)** show further in more details the mixing unit 5, particularly of the plurality of mixing elements 52. At their distal ends these mixing elements 52 preferably each comprise at least one blade 53, which can either be flat, convex or concave. Preferably, at least some of the blades 53 are sloped or curved in direction of the outlet 4. Some of the blades 53 can also be sloped in the opposite direction. In particular, the blades 53 can be oriented into different directions, e.g. can also be oriented towards the inlet 3. Blade 53 orientations can also vary on the mixing unit 5, for example, along the length of the central portion 51 and/or along the circumference of the central portion 51. The blades 53 improve the mixing of the liquid and the beverage or food product ingredients, when the mixing unit 5 is rotated.

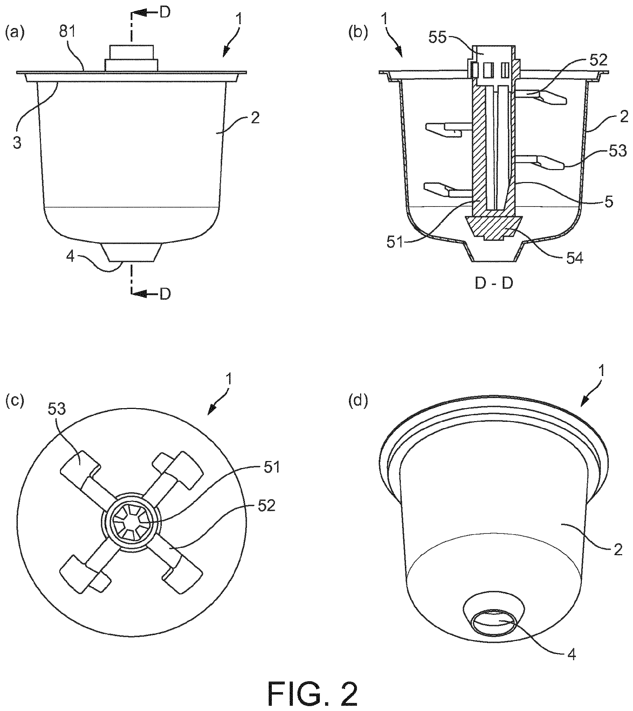

**Figure 2 (b)** shows the capsule 1 of the present invention in an opened state, i.e. in a state in which the outlet 4 is open and a beverage or food product can be dispensed. In order to open the outlet 4, the mixing unit 5 is able to move from its first position - shown in **figure 1 (b)** - to a second position - shown in **figure 2 (b)** - in which the outlet 4 becomes exposed. Preferably, the whole mixing unit 5 can be displaced in respect to the body 2, so that the plug member 54 is removed from the outlet 4. The relative movement between the mixing unit 5 and the capsule body 2 is preferably caused by rotating the mixing unit 5. In other words, the mixing unit 5 can act like a screw that can screw into and out of the body 2, respectively. However, the mixing unit 5 can also be configured to carry out a combined movement, which consists of a linear displacement from the first to the second position and of a rotation in the second position.

The mixing unit 5 is designed such that it can be rotated by the food or beverage production machine 10, into which the capsule 1 is inserted. When a production cycle is started by the food or beverage production machine 10, in a first step the mixing unit 5 is moved from the first position to the second position, in order to open the outlet 4. The movement can be caused by rotating the mixing unit 5. In a second step the mixing unit 5 is rotated in its second position, preferably without any further displacement in respect to the body 2. In this second step the rotation of the mixing unit 5 ensures a proper mixing of the liquid with the beverage or food product ingredients.

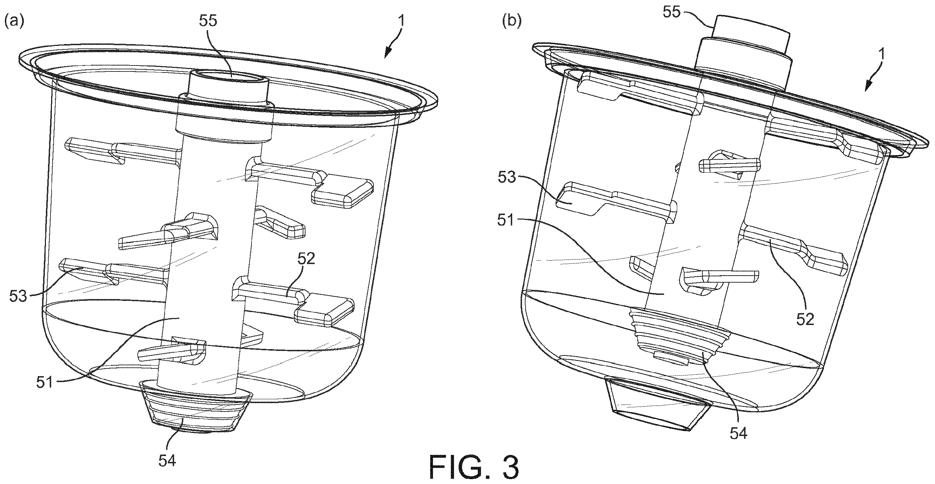

**Figure 3** shows perspective views of the capsule 1 of the present invention. **Figure 3 (a)** shows the closed state of the capsule 1, and shows in **figure 3 (b)** the opened state of the capsule 1. That means, in **figure 3 (a)** the mixing unit 5 is in the first position, and in **figure 3 (b)** the mixing unit 5 has been moved to the second position, for example by being rotated. **Figures 3 (a)** and **(b)** also show the blades 53, of which preferably at least some are tilted in direction of the outlet 4. The blades 53 support a further advantage and purposes of the mixing unit 5.

In particular, when the mixing unit 5 rotates, the blades 53 generate a force that acts on the beverage or food product produced in the body 2. The generated force of the rotating mixing unit 5 is similar to a force generated by turbine blades. As a consequence, a pressure is applied onto the beverage or food product produced in the capsule 1 in direction of the outlet 4. Thus, the dispensing of the beverage or food product through the outlet 4 and the proper emptying of the capsule 1 are facilitated. In particular, when additionally the liquid is introduced into the capsule 1 under pressure, the combinative pressures of the mixing unit 5 and the introduced liquid can achieve that the capsule body 2 is completely emptied from the produced beverage or food product, even when the produced beverage or food product has a high-viscosity, e.g. when it is a soup or puree.

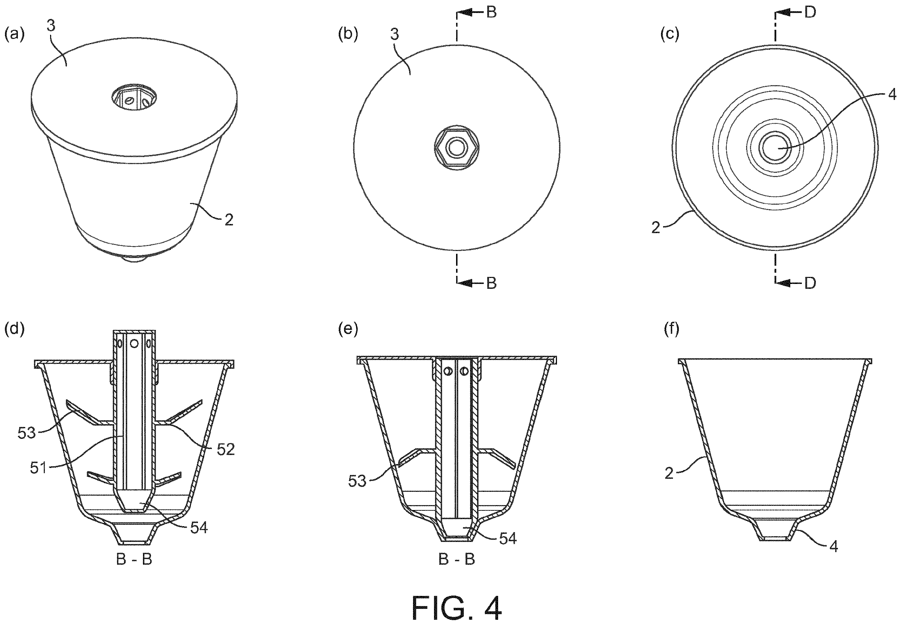

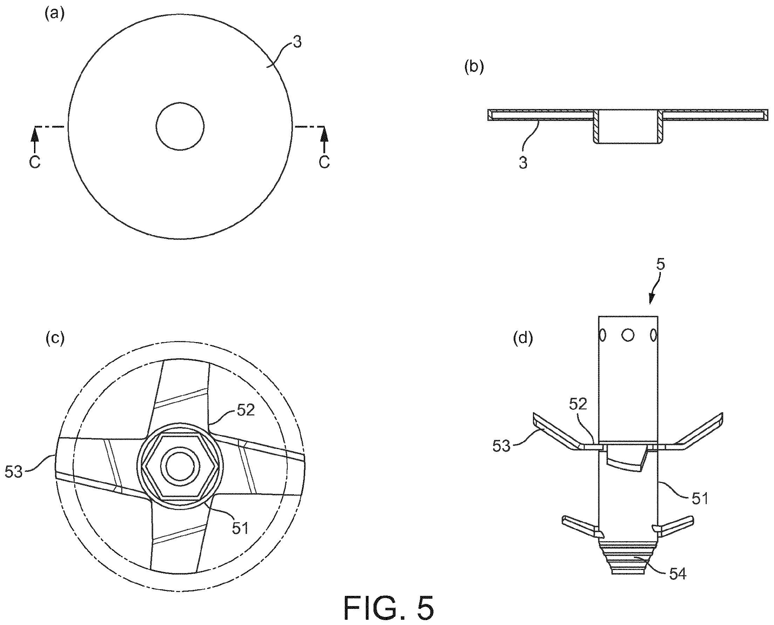

The **figure 4** and the **figure 5** show further views of the capsule 1 of the present invention. **Figure 4 (a)** shows the body 2 of the capsule 1 with the cover over the inlet 3. **Figure 4 (b)** shows the capsule 1, particularly the cover on the inlet 3 side as seen from above. **Figure 4 (c)** shows the capsule 1 as seen from above without the cover. Here the outlet 4 on the bottom of the cavity defined by the body 2 is visible. **Figure 4 (d)** shows how the mixing unit 5 is arranged inside the body 2, particularly in its second position that opens the outlet 4. **Figure 4 (e)** shows the mixing unit 5 in its first position that closes the outlet 4. Finally, **figure 4 (f)** shows a cut through the capsule 1 without showing the mixing unit 5. In one embodiment the diameter of the inlet 3 of the capsule 1 is preferably 50-70 mm, more preferably about 60 mm. The height of the capsule 1 from the inlet 3 to the outlet 4 is preferably 50-70 mm, more preferably 55-60 mm. The side walls of the body 2 preferably form a cup and are sloped by an angle of 25°-35°, preferably 30°, in respect to a rotational axis of the capsule 1.

**Figure 5** shows further views of the capsule 1. More precisely, **figure 5(a)** shows a top view of the cover on the inlet 3 side. The cover preferably has a hole, through which the mixing unit 5 is passed. In particular, the coupling means 55 of the mixing unit 5 can be engaged through the hole by driving means 12 of the food or beverage production machine 10. Thus, the driving means 12 can mechanically couple to the mixing unit 5 for rotating and/or moving it in respect to the body 2. **Figure 5 (b)** shows a cut through the cover.

The mixing unit 5 is shown further in **figures 5 (c) and (d)**. In particular, the mixing elements 52 extending radially from the central portion 51 and the blades 53 provided at the distal ends of the mixing elements 52 are illustrated. Some of the blades in **figure 5 (d)** are tilted towards the outlet 4, and some of the blades 53 are tilted in direction of the inlet 3. Such an arrangement of the blades 53 provides on the one hand side a good mixing of the liquid and the beverage or food product ingredients inside the body 2, and on the other hand side sufficient pressure directed downwards in direction of the outlet 4, in order to properly dispense the beverage or food product from the capsule 1. In one embodiment the central portion has a preferred diameter of 10-15 mm. The diameter of the circle defined by the distal ends of the radially extending mixing elements 52 and blades 53 is preferably between 35-45 mm, more preferably 40-42 mm.

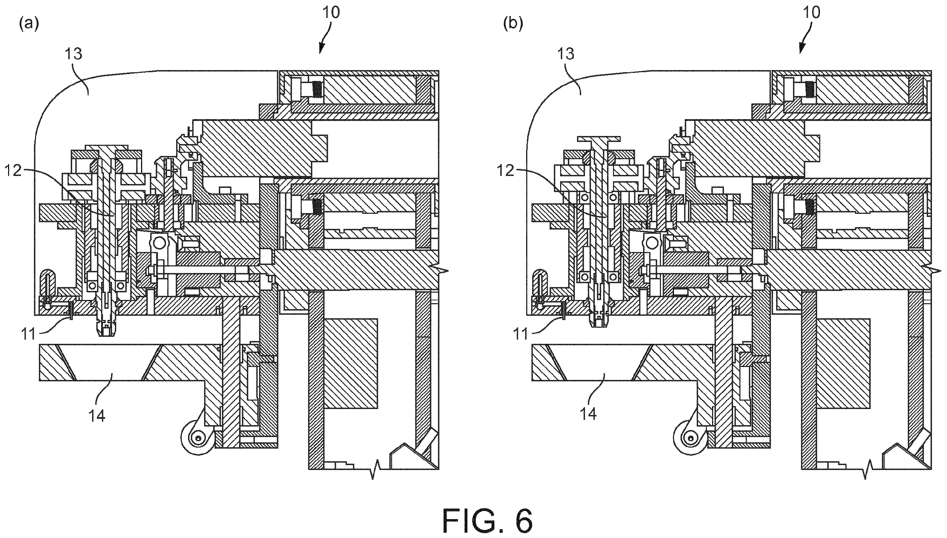

**Figure 6** shows a food or beverage production machine 10 of the system of the present invention without an inserted capsule 1. The food or beverage production machine 10 has a housing 13, in which driving means 12 are situated. The driving means 12 are preferably rotatable and/or movable in respect to the housing 13, and are preferably driven by an electric motor or the like of the machine 10. The driving means 12 are able to couple to the coupling means 55 of the mixing unit 5 in a capsule 1 of the present invention. In order to ensure that the mixing unit 5 is rotated in respect to the body 2 of the capsule 1, the food or beverage production machine 10 further comprises a capsule holder, which at least includes a capsule seat 14, into which the capsule 1 can be fit so that it is held against rotation. Additionally, the food or beverage production machine 10 comprises preferably injection means, for example a piercing member 11, for injecting a liquid into the capsule 1. It is also possible that the food or beverage production machine 10 injects the liquid via the driving means 12. The driving means 12 may have integrated a water supply line. In such a case the capsule 1 is preferably provided with a mixing unit 5, which has means, for example a conduit inside the central portion 51 connected to orifices to the outside of the mixing unit 5, for supplying the liquid into the capsule.

**Figure 6 (a)** shows a state, in which the driving means 12 are extended as far as possible towards the capsule holder 14. In this state the mixing unit 5 of an inserted capsule 1 can be pushed towards the outlet 4, in order to expand the volume of the capsule 1, or in order to close the outlet 4. In **figure 6 (b)** the driving means 12 have been moved in respect to the housing 13, and are in a position furthest away from the capsule seat 14. In this state the driving means 12 are at least rotatable, in order to rotate the mixing unit 5 of an inserted capsule 1.

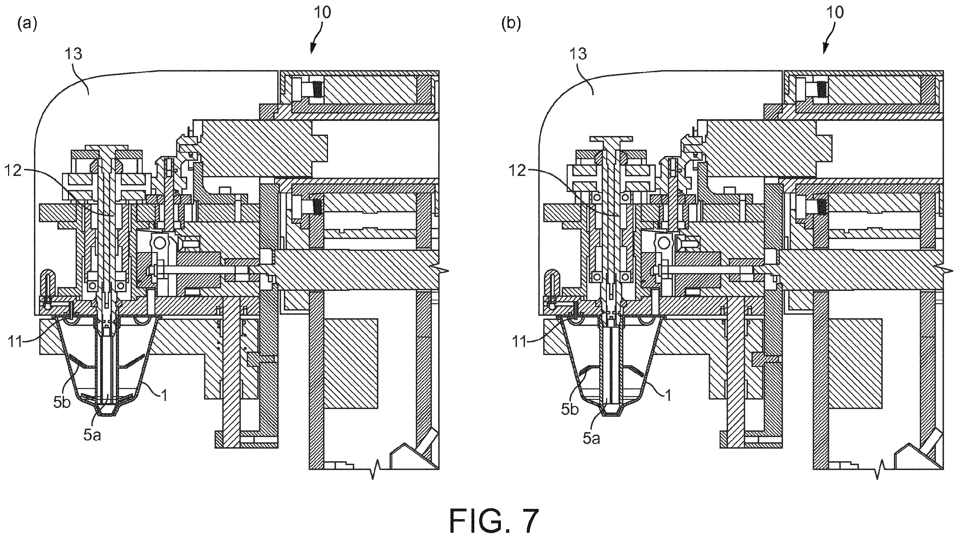

**Figure 7** shows the system of the present invention with capsule 1 inserted into the food or beverage production machine 10. In **figure 7 (a)** the driving means 12 are coupled to the mixing unit 5, and the mixing unit 5 is moved into its first position, in which it closes the outlet 4 of the capsule 1. The injection means 11 are injected through the inlet 3 side cover of the capsule 1, and are positioned to supply a liquid into the capsule. The liquid can be a heated liquid, for example heated by an in-line heating assembly of the food or beverage production machine 10. The liquid can also be pressurized by a pump of the food or beverage production machine 10.

In **figure 7 (b)** the driving means 12 have been rotated and/or moved, and the mixing unit 5 coupled to the driving means 12 has been accordingly displaced from the first position to its second position, i.e. the outlet 4 of the capsule 1 is open. Now the driving means 12 are able to rotate the mixing unit 5, in order to properly mix the injected liquid with the beverage or food product ingredients, and to push the produced beverage or food product through the outlet 4. The food or beverage production machine 10 is preferably able to vary the rotation speed of the driving means 12. Depending on the rotation speed 12 of the driving means 12, and accordingly of the mixing unit 5, the food or beverage production machine 10 can caused different pressures that push onto the beverage or food product produced in the body 2 of the capsule 1. Thereby, the beverage or food product is pressed downwards to be dispensed from the capsule 1. Even a high-viscosity beverage or food product can be properly and completely dispensed by the system of the present invention.

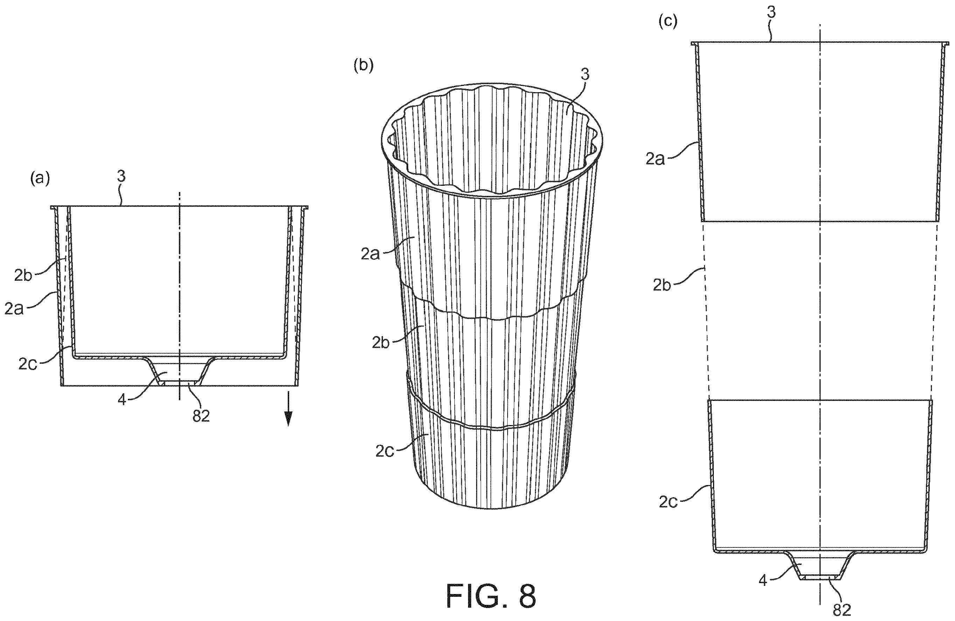

**Figure 8** shows a capsule 1 of the present invention, which is designed to expand from an initial state - shown in **figure 8 (a)** **-** to a final state - shown in **figure 8 (b)** - when the mixing unit 5 is pushed towards the outlet 4. Alternatively, the capsule 1 can also be pushed from the initial state to the expanded state by the liquid introduced, preferably under pressure, into the capsule 1. **Figure 8 (c)** further shows a perspective view of the capsule 1 in the expanded state.

The capsule body 2 of the expandable capsule 1 comprises preferably at least three parts. In the expanded state the three parts form an upper part 2a, a middle part 2b and a lower part 2c. The upper part 2a comprises the inlet 3. The lower part 2c comprises the outlet 4. The upper part 2a preferably has a larger diameter than the middle part 2b, and the middle part 2b has preferably a larger diameter than the lower part 2c. In the initial state the lower part 2c is preferably arranged within the upper part 2a. In particular, the upper part 2a preferably surrounds the lower part 2c concentrically in the initial state. At the same time the middle part 2b is preferably folded, and is arranged in its folded state in a gap between the larger diameter of the upper part 2a and the smaller diameter of the lower part 2c. The capsule 1 is thus compacted to an initial length.

When in the initial state a pressure is applied to the lower part 2c in direction of the outlet 4 - for example by the mixing unit 5 and/or by liquid pressure pushing downwards in direction of the outlet 4 - the lower part 2c is displaced in respect to the upper part 2a, i.e. it is pushed out from within the upper part 2a. Thereby, the middle part 2b is unfolded. The middle part 2b can, for example, be a film or a similar movable and/or flexible part. Once the middle part 2b is completely unfolded, the capsule body has reached its final length. By increasing its initial length to its final length the capsule body 2 also increases its volume. In particular the capsule 1 behaves like a bellows, which is also able to increase its volume, when pushed from the inside to the outside.

In summary, the present invention discloses a system and a capsule 1 with an integrated single-use mixing unit 5, which can be rotated by a corresponding food or beverage production machine 10. By rotating the single-use mixing unit 5, at least a proper mixing of the beverage or food product ingredients and the liquid introduced into the capsule 1 is achieved. Further, a pressure is generated inside the capsule body 2, which pushes the produced beverage or food product through the capsule outlet 4. Preferably, the rotation of the single-use mixing unit can also be used for selectively moving the mixing unit 5 from the first to the second position, in order to selectively open or close the outlet 4.

For producing a beverage or food product the present invention proposes the following method steps. Firstly, a liquid is introduced into the capsule 1. At the same time, or with some delay to allow pressure to build up in the capsule 1, the internal mixing unit 5 of the capsule 1 is moved from the first position to the second position to open the outlet 4. At the same time or afterwards the mixing unit 5 is rotated, in order to generate the downward pressure.

After dispensing the beverage or food product completely from the capsule 1, the mixing unit 5 can optionally be rotated in the opposite direction, in order to move it from the second position to the first position. Thereby, the outlet 4 is again closed, and dripping of liquid or any residual ingredients from the capsule 1 can be prevented. The closed capsule 1 can then be removed from the food or beverage production machine 10, and can be disposed.

As main advantage the present invention enables the efficient production of a high-viscous beverage or food product from a single-use capsule.

It should be understood that various changes and modifications to the presently preferred embodiments described herein will be apparent to those skilled in the art. Such changes and modifications can be made without departing from the scope of the present invention which is defined by the appended claims.

## Claims

1. Capsule (1) for insertion into a food or beverage production machine (10), comprising :
(i) an inlet (3),
(ii) a capsule body (2) for containing ingredients to produce a beverage or food product if combined with a liquid introduced into the inlet (3) of the capsule (1),
(iii) an outlet (4) for dispensing the beverage or food product from the capsule (1),
(iv) a mixing unit (5) arranged inside said body (2) for mixing the ingredients and the liquid, said capsule being **characterized in that** the mixing unit (5) comprises an elongated, preferably cylindrical, central portion (51), and a plurality of mixing elements (52) extending radially from the central portion (51), the mixing unit (5) being rotatable in respect to the body (2) and is designed to generate a pressure in direction of the outlet (4) on the beverage or food product in the body (2) by being rotated.

2. Capsule (1) according to claim 1 wherein the mixing unit (5) is selectively movable in respect to the body (2) between a first position, in which the outlet (4) is closed by the mixing unit (5), and a second position, in which the outlet (4) is open.

3. Capsule (1) according to claim 2 wherein the mixing unit (5) is movable between the first position and the second position by being rotated around its longitudinal axis.

4. Capsule (1) according to claim 2 wherein the mixing unit is movable between the first position and the second position by being translated along its longitudinal axis.

5. Capsule (1) according to any of the previous claims, wherein each mixing element (51) comprises a blade (53) on its distal end.

6. Capsule (1) according to claim 5, wherein at least some of the blades (53) are sloped in direction of the outlet (4).

7. Capsule (1) according to any of the previous claims, wherein the body (2) of the capsule (1) is designed to increase its volume when a pressure is applied onto the mixing unit (5) in the first position in direction of the outlet (4).

8. Capsule (1) according to any of the previous claims, wherein the mixing unit (5) comprises coupling means (55) for mechanically coupling to a beverage production machine (10) for being moved and/or rotated by the beverage production machine (10).

9. Capsule (1) according to claim 8, wherein the coupling means (55) are designed to deform when decoupled from the beverage production machine (10) so that a further coupling to the beverage production machine (10) is prevented.

10. Capsule (1) according to any of the previous claims, wherein the outlet (4) and the inlet (3) of the capsule (1) are sealed by sealing means (81, 82), preferably by membranes and/or foils, and the sealing means (81, 82) can be pierced and/or can be peeled off from the capsule (1).

11. System for producing a beverage or food product comprising :
(i) a capsule (1) according to one of the claims 1 to 10, and
(ii) a food or beverage production machine (10),
wherein the food or beverage production machine (10) is configured to rotate and/or move the mixing unit (5) of the capsule (1) in respect to the body (2) of the capsule (1).

12. System according to claim 11, wherein the food or beverage production machine (10) comprises driving means (12) for mechanically coupling to coupling means (55) of the mixing unit (5), and the driving means (12) are rotatable and/or movable in respect to a housing (13) of the beverage production machine (10).

13. System according to claim 11 or 12, wherein the food or beverage production machine (10) is configured to introduce a liquid into the capsule (1), preferably to inject a liquid through sealing means (81) sealing the inlet (3) of the capsule (1) by a piercing member (11).

14. Method for producing a beverage or food product, comprising the steps of :
(i) introducing a liquid into a capsule (1) according to any of claims 1-10 containing precursor ingredients for producing the beverage or food product if combined with the liquid,
(ii) moving the mixing unit (5) arranged inside the capsule (1) from a first position, in which an outlet (4) of the capsule (1) is closed by the mixing unit (5), to a second position, in which the outlet (4) is open, and
(iii) rotating the mixing unit (5) in its second position, in order to generate a pressure in direction of the outlet (4) on the beverage or food product in the capsule (1).

15. Method according to claim 14, wherein the step of moving the mixing unit (5) is carried out by rotating the mixing unit (5) in its first position.

## Patentansprüche

1. Kapsel (1) zum Einsetzen in eine Nahrungsmittel- oder Getränkeherstellungsmaschine (10), umfassend:
(i) einen Einlass (3),
(ii) einen Kapselkörper (2) zur Aufnahme von Inhaltsstoffen zur Herstellung eines Getränke- oder Nahrungsmittelprodukts bei Kombination mit einer in den Einlass (3) der Kapsel (1) eingeführten Flüssigkeit,
(iii) einen Auslass (4) zur Abgabe des Getränke- oder Nahrungsmittelprodukts aus der Kapsel (1),
(iv) eine Mischeinheit (5), angeordnet innerhalb des Körpers (2), zum Mischen der Inhaltsstoffe und der Flüssigkeit,
wobei die Kapsel **dadurch gekennzeichnet ist, dass**
die Mischeinheit (5) einen langgestreckten, vorzugsweise zylindrischen, mittleren Abschnitt (51) und eine Vielzahl von Mischelementen (52), die radial vom mittleren Abschnitt (51) aus verlaufen, umfasst, die Mischeinheit (5) in Bezug auf den Körper (2) drehbar und so konstruiert ist, dass sie durch Drehbewegung auf das Getränke- oder Nahrungsmittelprodukt im Körper (2) einen Druck in Richtung des Auslasses (4) erzeugt.

2. Kapsel (1) nach Anspruch 1, wobei die Mischeinheit (5) in Bezug auf den Körper (2) selektiv beweglich ist zwischen einer ersten Position, in der der Auslass (4) durch die Mischeinheit (5) geschlossen ist, und einer zweiten Position, in der der Auslass (4) offen ist.

3. Kapsel (1) nach Anspruch 2, wobei die Mischeinheit (5) durch Drehbewegung um ihre Längsachse zwischen der ersten Position und der zweiten Position beweglich ist.

4. Kapsel (1) nach Anspruch 2, wobei die Mischeinheit durch Umsetzen entlang ihrer Längsachse zwischen der ersten Position und der zweiten Position beweglich ist.

5. Kapsel (1) nach einem der vorstehenden Ansprüche wobei jedes der Mischelemente (51) an seinem distalen Ende ein Rührblatt (53) aufweist.

6. Kapsel (1) nach Anspruch 5, wobei mindestens einige der Rührblätter (53) in Richtung des Auslasses (4) geneigt sind.

7. Kapsel (1) nach einem der vorstehenden Ansprüche, wobei der Körper (2) der Kapsel (1) so konstruiert ist, dass sein Volumen zunimmt, wenn in der ersten Position in Richtung des Auslasses (4) ein Druck an die Mischeinheit (5) angelegt wird.

8. Kapsel (1) nach einem der vorstehenden Ansprüche wobei die Mischeinheit (5) Kopplungsmittel (55) zum mechanischen Koppeln an eine Getränkeherstellungsmaschine (10) umfasst, um von der Getränkeherstellungsmaschine (10) bewegt und/oder gedreht zu werden.

9. Kapsel (1) nach Anspruch 8, wobei die Kopplungsmittel (55) so konstruiert sind, dass sie sich beim Entkoppeln von der Getränkeherstellungsmaschine (10) verformen, sodass ein weiteres Ankoppeln an die Getränkeherstellungsmaschine (10) verhindert wird.

10. Kapsel (1) nach einem der vorstehenden Ansprüche, wobei Auslass (4) und Einlass (3) der Kapsel (1) durch Dichtungsmittel (81, 82) abgedichtet sind, vorzugsweise durch Membranen und/oder Folien, und die Dichtungsmittel (81, 82) von der Kapsel (1) durchstochen und/oder abgezogen werden können.

11. System zur Herstellung eines Getränke- oder Nahrungsmittelprodukts, umfassend:
(i) eine Kapsel (1) nach einem der Ansprüche 1 bis 10, und
(ii) eine Nahrungsmittel- oder Getränkeherstellungsmaschine (10),
wobei die Nahrungsmittel- oder Getränkeherstellungsmaschine (10) dazu konfiguriert ist, die Mischeinheit (5) der Kapsel (1) in Bezug auf den Körper (2) der Kapsel (1) zu drehen und/oder zu bewegen.

12. System nach Anspruch 11, wobei die Nahrungsmittel- oder Getränkeherstellungsmaschine (10) Antriebsmittel (12) zum mechanischen Koppeln an die Kopplungsmittel (55) der Mischeinheit (5) umfasst, und die Antriebsmittel (12) in Bezug auf ein Gehäuse (13) der Getränkeherstellungsmaschine (10) drehbar und/oder beweglich sind.

13. System nach Anspruch 11 oder 12, wobei die Nahrungsmittel- oder Getränkeherstellungsmaschine (10) dazu konfiguriert ist, eine Flüssigkeit in die Kapsel (1) einzuführen, vorzugsweise eine Flüssigkeit durch ein Dichtungsmittel (81), das den Einlass (3) der Kapsel (1) abdichtet, durch ein Durchlochungselement (11) zu injizieren.

14. Verfahren zur Herstellung eines Getränke- oder Nahrungsmittelprodukts, folgende Schritte umfassend:
(i) Einführen einer Flüssigkeit in eine Kapsel (1) nach einem der Ansprüche 1 bis 10, die Inhaltsstoff-Vorstufen zur Herstellung des Getränke- oder Nahrungsmittelprodukts bei Kombination mit der Flüssigkeit enthält,
(ii) Bewegen der in der Kapsel (1) angeordneten Mischeinheit (5) aus einer ersten Position, in der ein Auslass (4) der Kapsel (1) durch die Mischeinheit (5) geschlossen ist, in eine zweite Position, in der der Auslass (4) offen ist, und
(iii) Drehen der Mischeinheit (5) in ihre zweite Position, um in Richtung des Auslasses (4) einen Druck auf das Getränke- oder Nahrungsmittelprodukt in der Kapsel (1) zu erzeugen.

15. Verfahren nach Anspruch 14, wobei der Schritt des Bewegens der Mischeinheit (5) durch Drehen der Mischeinheit (5) in ihre erste Position ausgeführt wird.

## Revendications

1. Capsule (1) pour insertion dans une machine de production d'aliment ou de boisson (10), comprenant :
(i) une entrée (3),
(ii) un corps de capsule (2) destiné à contenir des ingrédients pour produire un produit de boisson ou alimentaire s'ils sont combinés avec un liquide introduit dans l'entrée (3) de la capsule (1),
(iii) une sortie (4) permettant de distribuer le produit de boisson ou alimentaire à partir de la capsule (1),
(iv) une unité de mélange (5) disposée à l'intérieur dudit corps (2) afin de mélanger les ingrédients et le liquide,
ladite capsule étant **caractérisée en ce que**
l'unité de mélange (5) comprend une partie centrale allongée, de préférence cylindrique (51) et une pluralité d'éléments de mélange (52) s'étendant en sens radial à partir de la partie centrale (51), l'unité de mélange (5) pouvant tourner par rapport au corps (2) et est conçue pour générer une pression en direction de la sortie (4) sur le produit de boisson ou alimentaire dans le corps (2) en étant tournée.

2. Capsule (1) selon la revendication 1, dans laquelle l'unité de mélange (5) peut se déplacer sélectivement par rapport au corps (2) entre une première position, dans laquelle la sortie (4) est fermée par l'unité de mélange (5) et une deuxième position, dans laquelle la sortie (4) est ouverte.

3. Capsule (1) selon la revendication 2, dans laquelle l'unité de mélange (5) peut être déplacée entre la première position et la deuxième position en étant tournée autour de son axe longitudinal.

4. Capsule (1) selon la revendication 2, dans laquelle l'unité de mélange peut être déplacée entre la première position et la deuxième position en étant déplacée par translation le long de son axe longitudinal.

5. Capsule (1) selon l'une quelconque des revendications précédentes, dans laquelle chaque élément de mélange (51) comprend une pale (53) sur son extrémité distale.

6. Capsule (1) selon la revendication 5, dans laquelle au moins certaines des pales (53) sont penchées en direction de la sortie (4).

7. Capsule (1) selon l'une quelconque des revendications précédentes, dans laquelle le corps (2) de la capsule (1) est conçu pour augmenter son volume lorsqu'une pression est appliquée sur l'unité de mélange (5) dans la première position en direction de la sortie (4).

8. Capsule (1) selon l'une quelconque des revendications précédentes, dans laquelle l'unité de mélange (5) comprend un moyen de couplage (55) destiné à se coupler mécaniquement à une machine de production de boisson (10) afin d'être déplacé et/ou tourné par la machine de production de boisson (10).

9. Capsule (1) selon la revendication 8, dans laquelle le moyen de couplage (55) est conçu pour se déformer lorsqu'il est désaccouplé de la machine de production de boisson (10) de sorte qu'un couplage ultérieur à la machine de production de boisson (10) soit empêché.

10. Capsule (1) selon l'une quelconque des revendications précédentes, dans laquelle la sortie (4) et l'entrée (3) de la capsule (1) sont scellées par un moyen de scellage (81, 82), de préférence par des membranes et/ou des feuilles métalliques et le moyen de scellage (81, 82) peut être percé et/ou peut être décollé de la capsule (1).

11. Système pour produire un produit de boisson ou alimentaire comprenant :
(i) une capsule (1) selon l'une des revendications 1 à 10 et
(ii) une machine de production d'aliment ou de boisson (10),
dans lequel la machine de production d'aliment ou de boisson (10) est conçue pour tourner et/ou déplacer l'unité de mélange (5) de la capsule (1) par rapport au corps (2) de la capsule (1).

12. Système selon la revendication 11, dans lequel la machine de production d'aliment ou de boisson (10) comprend un moyen d'entraînement (12) destiné à se coupler mécaniquement au moyen de couplage (55) de l'unité de mélange (5) et le moyen d'entraînement (12) peut tourner et/ou se déplacer par rapport à un logement (13) de la machine de production de boisson (10).

13. Système selon la revendication 11 ou 12, dans lequel la machine de production d'aliment ou de boisson (10) est conçue pour introduire un liquide dans la capsule (1), de préférence pour injecter un liquide à travers le moyen de scellage (81) scellant l'entrée (3) de la capsule (1) par un élément de perçage (11).

14. Procédé de production d'un produit de boisson ou alimentaire, comprenant les étapes consistant à :
(i) introduire un liquide dans une capsule (1) selon l'une quelconque des revendications 1 à 10, contenant des ingrédients précurseurs pour produire le produit de boisson ou alimentaire s'ils sont combinés avec le liquide,
(ii) déplacer l'unité de mélange (5) disposée à l'intérieur de la capsule (1) d'une première position, dans laquelle la sortie (4) de la capsule (1) est fermée par l'unité de mélange (5), à une deuxième position, dans laquelle la sortie (4) est ouverte et
(iii) tourner l'unité de mélange (5) dans sa deuxième position, afin de générer une pression en direction de la sortie (4) sur le produit de boisson ou alimentaire dans la capsule (1).

15. Procédé selon la revendication 14, dans lequel l'étape de déplacement de l'unité de mélange (5) est effectuée en faisant tourner l'unité de mélange (5) dans sa première position.
